# NEUE EUROPÄISCHE PATENTSCHRIFT

(11) **EP 0 689 963 B2**
(45) Veröffentlichungstag und Bekanntmachung des Hinweises auf die Entscheidung über den Einspruch: **02.07.2003**
(45) Hinweis auf die Patenterteilung: 23.09.1998
(21) Anmeldenummer: 95109172.7
(22) Anmeldetag: 14.06.1995
(51) Int. Cl.: B60R 1/12, E05F 15/20

(54) **Innenrückblickspiegel für Kraftfahrzeuge**
Internal rear-view mirror for motor vehicles
Rétroviseur intérieur pour véhicules automobiles

(30) Priorität: 01.07.1994 DE 4423134
(43) Veröffentlichungstag der Anmeldung: 03.01.1996
(73) Patentinhaber: Reitter & Schefenacker GmbH & Co. KG, 73730 Esslingen (DE)
(72) Erfinder: Zimmermann, Werner, D-73113 Ottenbach (DE); Kusuma, Djuanarto, D-96472 Rödental (DE)
(74) Vertreter: Kohl, Karl-Heinz

(56) Entgegenhaltungen:
- EP-A- 0 165 817
- DE-A- 2 332 885
- DE-A- 2 511 406
- DE-A- 2 620 946
- DE-A- 3 147 281
- DE-A- 4 123 640
- DE-C- 3 827 879
- GB-A- 2 157 633
- US-A- 3 214 578
- US-A- 4 247 850
- US-A- 4 447 808
- US-A- 4 963 876

## Beschreibung

Die Erfindung betrifft einen Innenrückblickspiegel für Kraftfahrzeuge nach dem Oberbegriff des Anspruches 1.

Es sind fernsteuerbare Garagentore bekannt, die mittels eines Handsenders vom Kraftfahrzeug aus geöffnet bzw. geschlossen werden können. Der Handsender wird im Kraftfahrzeug abgelegt und muß, wenn er benutzt werden soll, häufig im Kraftfahrzeug gesucht werden.

Aus der DE-A1 26 20 946 ist ein Innenrückblickspiegel für Fahrzeuge bekannt, der einen Antennenverstärker aufweist, der im Spiegelfuß untergebracht ist

Es ist auch bekannt (US-A-4 247 850), an einer Sonnenschutzblende des Kraftfahrzeuges einen Teil einer Garagentorsteuerung vorzusehen. Das Blendteil der Sonnenschutzblende weist zur Aufnahme eines Teils der Garagentorsteuerung eine aufwendige Ausbildung auf. Ist das Blendteil hochgeklappt, ist das Aussenden entsprechender Signale durch die Garagentorsteuerung eingeschränkt.

Es ist schließlich auch bekannt (GB-A 2 157 633), im Gehäuse eines Rückblickspiegels ein Antennenelement unterzubringen.

Der Erfindung liegt die Aufgabe zugrunde, den gattungsgemäßen Innenrückblickspiegel so auszubilden, daß er bei einfacher konstruktiver Ausbildung mit zumindest einem Teil einer Garagentorsteuerung versehen werden kann.

Diese Aufgabe wird beim gattungsgemäßen Innenrückblickspiegel erfindungsgemäß mit den kennzeichnenden Merkmalen des Anspruches 1 gelöst.

Beim erfindungsgemäßen Innenrückblickspiegel ist zumindest ein Teil der Garagentorsteuerung im Aufnahmeraum des Spiegelgehäuses untergebracht. Der Aufnahmeraum wird durch die Kappe verschlossen, die lösbar am Spiegelgehäuse gehalten ist. Dadurch kann sie bei Bedarf leicht entfernt werden, um den Teil der Garagentorsteuerung beispielsweise auszutauschen. Die den Aufnahmeraum verschließende Kappe ist so ausgebildet, daß sie nach dem Aufsetzen eine stetige Fortsetzung des übrigen Teiles des Spiegelgehäuses bildet. Das Spiegelgehäuse benötigt keine besondere Formgebung zur Aufnahme des Teils der Garagentorsteuerung. Um das Garagentor zu öffnen bzw. zu schließen, muß nicht ein Handsender im Fahrzeug gelagert werden. Der Fahrer des Kraftfahrzeuges kann die im Aufnahmeraum des Spiegelgehäuses eingebaute Garagentorsteuerung beispielsweise mittels eines am Armaturenbrett befindlichen Schalters betätigen werden. Für die Garagentorsteuerung ist ein zusätzlicher Einbauraum im Fahrzeug nicht erforderlich; vielmehr kann der innenraum des Spiegelgehäuses des ohnehin vorhandenen Innenrückblickspiegels genutzt werden.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: im Schnitt einen erfindungsgemäßen Innenrückblickspiegel,
- Fig. 2: in schematischer Darstellung ein Blockdiagramm einer Garagentorsteuerung, die im Innenrückblickspiegel gemäß Fig. 1 untergebracht ist.

Der Innenrückblickspiegel hat einen Spiegelfuß 1, der in bekannter Weise im Kraftfahrzeug befestigt ist. Am Spiegelfuß 1 ist ein Spiegelgehäuse 2 mittels eines Kugelgelenkes 3 schwenkbar gelagert. Das Spiegelgehäuse 2 ist mit einem Spiegelglasträger 4 versehen, auf dem ein Spiegelglas 5 befestigt ist.

Der Spiegelfuß 1 sitzt oberhalb einer Abdeckung 6. Sie hat einen vorzugsweise am Spiegelfuß 1 einrastbaren Abdeckteil 7, der plattenförmig ausgebildet und konvex gekrümmt ist. Etwa in Höhe des Spiegelgehäuses 2 geht der Abdeckteil 7 in einen in Richtung auf die (nicht dargestellte) Windschutzscheibe des Fahrzeuges verlaufenden vorderen Abdeckteil 8 über, der im Bereich oberhalb des Spiegelgehäuses 2 liegt. Durch diesen vorderen Abdeckteil 8 ragt ein Halter 9, an dem in bekannter Weise über den Spiegelglasträger 4 das Spiegelgehäuse 2 gehalten ist. In Richtung auf die Windschutzscheibe geht der Abdeckteil 8 in einen aufwärts sich erstreckenden Wandteil 10 über. Er erstreckt sich quer zur Fahrtrichtung des Kraftfahrzeuges und ist an seinen Enden mit Seitenwänden 11 versehen, die vorteilhaft rechtwinklig zum plattenförmigen Wandteil 10 verlaufen.

Der Halter 9 ragt durch den Abdeckteil 8 sowie durch eine Öffnung 12 des Spiegelfußes 1. Auf das durch die Öffnung 12 ragende Gewindeende 13 des Halters 9 ist eine Mutter 14 geschraubt, mit welcher der Halter 9 fest mit dem Spiegelfuß 1 verbunden werden kann. Die Öffnung 12 des Spiegelfußes 1 hat eine konisch in Richtung auf die Mutter 14 sich verjüngende Wandung, die mit einer entsprechenden konischen Außenmantelfläche des Halters 9 zusammenwirkt.

Der Halter 9 ist in seinem das Gewindeende 13 aufweisenden Bereich hülsenförmig ausgebildet. Durch diesen Teil des Halters 9 sind elektrische Zuleitungen 15 in das Spiegelgehäuse 2 geführt. Mit ihnen wird eine im Spiegelgehäuse 2 untergebrachte Garagentorsteuerung 16 mit Strom versorgt.

Die Garagentorsteuerung hat einen elektrischen Sender 17, der innerhalb des Spiegelgehäuses 2 untergebracht ist. Es hat eine vom übrigen Spiegelgehäuseteil 18' abnehmbare kappenartige Aufnahme 18, die innenseitig abstehende Stege 19 bis 21 aufweist, auf denen der Sender 17 aufliegt. Er ist beispielsweise mit (nicht dargestellten) Schrauben lösbar in der Aufnahme 18 befestigt. Die Aufnahme 18 ist für vom Sender ausgehende Signale durchlässig, so daß die von ihm ausgesandten Signalen zum garagentorseitigen Empfänger gelangen können.

Der Sender 17 ist mit einer Reset-Taste 22 versehen, mit der gespeicherte Daten der Garagentorsteuerung 16 gelöscht werden können. Die Reset-Taste 22 kann mittels eines Stiftes oder dergleichen, der durch eine Öffnung 23 im Spiegelgehäuse 2 gesteckt werden kann, betätigt werden. Da die Reset-Taste 22 innerhalb des Spiegelgehäuses liegt, kann sie nicht versehentlich betätigt werden.

Die Aufnahme 18 ist lösbar mit dem Spiegelgehäuse 2 verbunden, so daß sie im Bedarfsfall einfach abgenommen werden kann. So läßt sich die Aufnahme 18 beispielsweise mittels einer Rastverbindung mit dem Spiegelgehäuseteil 18' verbinden. Die Aufnahme 18 ist so ausgebildet, daß sie zusammen mit dem übrigen Gehäuseteil 18' das komplette Spiegelgehäuse 2 bildet. Die Aufnahme 18 ist dem Spiegelglasträger 4 gegenüberliegend vorgesehen und gegen die (nicht dargestellte) Windschutzscheibe des Kraftfahrzeuges gerichtet..

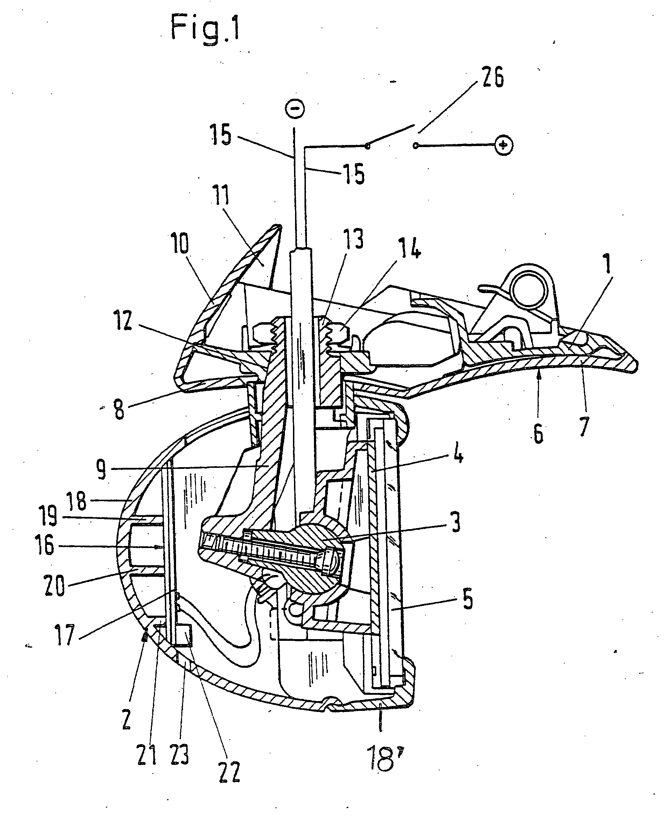

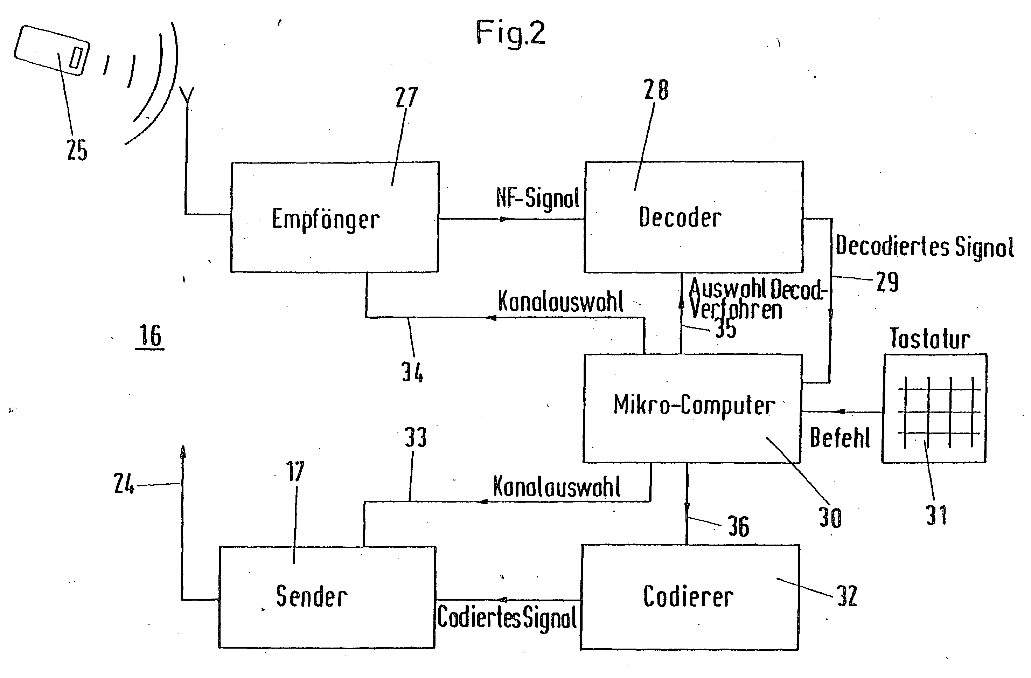

Die Garagentorsteuerung 16 wird anhand der Fig. 2 näher erläutert. Sie hat den Sender 17, der die entsprechenden Signale 24 aussendet, wenn das Garagentor geöffnet oder geschlossen werden soll. Die Garagentorsteuerung 16 kann mittels eines Handsenders 25, mit dem das Garagentor normalerweise signalgesteuert geöffnet bzw. geschlossen wird, programmiert werden. Dann wird der Handsender 25 nicht mehr zum Öffnen bzw. Schließen des Garagentores benötigt. Vielmehr wird dann innerhalb des Fahrzeuges eine Taste 26 (Fig. 1) betätigt, um den Sender 17 zum Öffnen bzw. Schließen des Garagentores zu aktivieren.

Die vom Handsender 25 ausgehenden Impulse werden von einem Empfänger 27 der Garagentorsteuerung 16 aufgefangen. Er gibt ein entsprechendes NF-Signal aus, das einem Decoder 28 zugeführt wird. Er decodiert die vom Handsender 25 und damit vom Empfänger 27 übertragenen Signale. Das decodierte Signal 29 wird einem Mikrocomputer 30 zugeführt. Er kann mittels einer Tastatur 31 programmiert werden. Ihm ist ein Codierer 32 nachgeschaltet, der das entsprechende Signal codiert und dem Sender 17 zuführt.

Mit dem Mikrocomputer 30 ist es möglich, den Sender 17 und den Empfänger 27 auf unterschiedliche Frequenzen einzustellen, zum Beispiel auf 27 MHz, 40 MHz, 433 MHz und 560 MHz. Der Mikrocomputer 30 ist zu diesem Zweck über entsprechende Signalleitungen 33 und 34 mit dem Sender 17 und dem Empfänger 27 verbunden. Mittels der Tastatur 31 können dem Mikrocomputer 30 die entsprechenden Signale zur jeweiligen Frequenzauswahl eingegeben werden.

Darüberhinaus ist es möglich, mit dem Mikrocomputer 30 auch unterschiedliche Decodierverfahren auszuwählen bzw. einzustellen. Der Mikrocomputer 30 ist dafür über entsprechende Signalleitungen 35 und 36 mit dem Decoder 28 und dem Codierer 32 verbunden. Zur Auswahl der entsprechenden Decodierverfahren werden über die Tastatur 31 die entsprechenden Befehle dem Computer 30 zugeführt.

Die Garagentorsteuerung 16 mit den beschriebenen Bauteilen ist komplett innerhalb des Spiegelgehäuses 2 untergebracht, so daß für sie kein gesonderter Einbauraum im Kraftfahrzeug vorgesehen werden muß. Infolge der beschriebenen Möglichkeiten kann die Garagentorsteuerung 16 auf die unterschiedlichsten Handsender 25 vom Benutzer in einfacher Weise abgestimmt werden. Darum müssen für die verschiedenen Frequenzen und Codierungen der Fernsteuersignale nicht unterschiedliche Garagentorsteuerungen gefertigt werden. Wird vom Benutzer des Kraftfahrzeuges ein neues, fernbedienbares Garagentor installiert, kann er die Garagentorsteuerung 16 sehr einfach auf das heue Garagentor einstellen. Mit der Reset-Taste 22 werden zunächst alle in der Garagentorsteuerung 16 gespeicherten Daten gelöscht. Dann wird mit dem Handsender 25 des neuen ferngesteuerten Garagentores die Garagentorsteuerung 16 eingestellt. Mittels der Tastatur 31 kann die jeweils erforderliche Frequenz und gegebenenfalls das jeweils erforderliche Decodierverfahren eingestellt werden. Dann wird der Handsender 25 gegen den Empfänger 27 gerichtet und betätigt. Die vom Empfänger 27 aufgenommenen Fernsteuersignale des Handsenders 25 werden in der beschriebenen Weise dem Sender 17 zugeführt und dort gespeichert. Der Sender 17 ist mit entsprechenden Speicherbausteinen versehen. Nunmehr kann durch Betätigen der Taste 26 der Sender 17 betätigt werden, der die entsprechenden Fernsteuersignale zum Öffnen oder Schließen des Garagentores aussendet.

Der Empfänger 27 kann innerhalb der Aufnahme 18 des Spiegelgehäuses 2 untergebracht sein. Für den Empfänger 27 ist aber auch jede andere Lage innerhalb des Spiegelgehäuses möglich. Der Empfänger 27 muß so angeordnet werden, daß die vom Handsender 25 ausgesandten Impulse bzw. Signale zum Empfänger 27 gelangen können. So kann der Empfänger 27 auch an der Außenseite des Spiegelgehäuses 2 angeordnet sein. Die Taste 26, welcher die Garagentorsteuerung 16 im Kraftfahrzeug betätigt wird, wird vorteilhaft so innerhalb des Kraftfahrzeuges positioniert, daß sie vom Fahrer bequem bedient werden kann.

## Patentansprüche

1. Innenrückblickspiegel für Kraftfahrzeuge, mit einem Spiegelfuß (1), an dem ein Spiegelgehäuse (2) verstellbar gelagert ist, das einen Aufnahmeraum aufweist, in dem ein Spiegelglasträger (4) und ein Kugelgelenk (3) untergebracht sind, über das das Spiegelgehäuse (2) gegenüber dem Spiegelfuß (1) verschwenkbar ist,
**dadurch gekennzeichnet, daß** im Aufnahmeraum zumindest ein Teil einer Garagentorsteuerung (16) angeordnet ist, daß der Aufnahmeraum durch eine im Querschnitt konkave Kappe (18) verschließbar ist, die lösbar mit einem Spiegelgehäuseteil (18') verbunden ist und diesen übrigen Gehäuseteil (18') zum kompletten Spiegelgehäuse (2) ergänzt, daß die Kappe (18) dem Spiegelglasträger (4) gegenüberliegend vorgesehen und für von der Garagentorsteuerung (16) ausgesandte Signale durchlässig ist, und daß die Garagentorsteuerung (16) mit einem Sender (17) für die Signale versehen ist, der an der Kappe (18) befestigt ist.

2. Innenrückblickspiegel nach Anspruch 1,
**dadurch gekennzeichnet, daß** die Signale Funksignale sind.

3. Innenrückblickspiegel nach Anspruch 1 oder 2,
**dadurch gekennzeichnet, daß** von der Innenseite der Kappe (18) Stege (19 bis 21) abstehen, auf denen der Sender (17) aufliegt.

4. Innenrückblickspiegel nach einem der Ansprüche 1 bis 3,
**dadurch gekennzeichnet, daß** die Garagentorsteuerung (16) programmierbar ist

5. Innenrückblickspiegel nach einem Ansprüche 1 bis 4,
**dadurch gekennzeichnet, daß** die Garagentorsteuerung (16) einen Empfänger (27) aufweist.

6. Innenrückblickspiegel nach Anspruch 5,
**dadurch gekennzeichnet, daß** der Sender (17) und der Empfänger (27) an einen Mikrocomputer (30) angeschlossen sind.

7. Innenrückblickspiegel nach Anspruch 6,
**dadurch gekennzeichnet, daß** zwischen dem Empfänger (27) und dem Mikrocomputer (30) ein Decoder (28) liegt.

8. Innenrückblickspiegel nach Anspruch 7 oder 8,
**dadurch gekennzeichnet, daß** zwischen dem Sender (17) und dem Mikrocomputer (30) ein Codierer (32) angeordnet ist.

9. Innenrückblickspiegel nach einem der Ansprüche 6 bis 8,
**dadurch gekennzeichnet, daß** der Mikrocomputer (30) über Signalleitungen (33, 34) zur Frequenzeinstellung mit dem Sender (17) und dem Empfänger (27) verbunden ist.

10. Innenrückblickspiegel nach einem der Ansprüche 6 bis 9,
**dadurch gekennzeichnet, daß** der Mikrocomputer (30) über Signalleitungen (35, 36) zur Einstellung des Decodier/Codierverfahrens mit dem Decoder und dem Codierer (32) verbunden ist.

## Claims

1. An internal rear-view mirror for motor vehicles, with a base (1) on which a housing (2) is mounted in an adjustable manner, which has a receiving space in which are arranged a mirror-glass support (4) and a ball-and-socket joint (3) by way of which the mirror housing (2) is pivotable with respect to the mirror base (1), **characterized in that** at least part of a garage-door control (16) is arranged in the receiving space, the receiving space can be closed by a cap (18) which is concave in cross-section and which is detachably connected to a mirror housing part (18') and complements the said remaining housing part (18') to form the complete mirror housing (2), the cap (18) is provided opposite the mirror-glass support (4) and can be traversed by signals emitted by the garage-door control (16), and the garage-door control (16) is provided with an emitter (17) for the signals, which is secured to the cap (18).

2. An internal rear-view mirror according to Claim 1, **characterized in that** the signals are radio signals.

3. An internal rear-view mirror according to Claim 1 or 2, **characterized in that** webs (19 to 21), on which the emitter (17) rests, project from the inside of the cap (18).

4. An internal rear-view mirror according to one of Claims 1 to 3, **characterized in that** the garage-door control (16) can be programmed.

5. An internal rear-view mirror according to one [of] Claims 1 to 4, **characterized in that** the garage-door control (16) has a receiver (27).

6. An internal rear-view mirror according to Claim 5, **characterized in that** the emitter (17) and the receiver (27) are connected to a microcomputer (30).

7. An internal rear-view mirror according to Claim 6, **characterized in that** a decoder (28) is arranged between the receiver (27) and the microcomputer (30).

8. An internal rear-view mirror according to Claim 7 or 8, **characterized in that** an encoder (32) is arranged between the emitter (17) and the microcomputer (30).

9. An internal rear-view mirror according to one of Claims 6 to 8, **characterized in that** the microcomputer (30) is connected to the emitter (17) and the receiver (27) by way of signal lines (33, 34) for setting the frequency.

10. An internal rear-view mirror according to one of Claims 6 to 9, **characterized in that** the microcomputer (30) is connected to the decoder and the encoder (32) by way of signal lines (35, 36) for setting the decoding/encoding procedure.

## Revendications

1. Rétroviseur intérieur pour véhicules automobiles, comportant un pied (1) de miroir sur lequel un boîtier (2) de miroir est monté réglable, **caractérisé en ce que** le boîtier (2) du miroir présente une cavité de réception pour au moins un élément d'une commande de porte de garage (16), **en ce que** la cavité de réception est susceptible d'être fermée par un capuchon (18) qui est relié de manière amovible au boîtier (2) du miroir et qui complète le reste du boîtier pour former le boîtier de miroir complet, **en ce que** le capuchon (18) est perméable aux signaux émis par la commande de porte de garage (16), et **en ce que** la commande de porte de garage (16) est pourvue d'un émetteur (17) pour les signaux.

2. Rétroviseur intérieur selon la revendication 1, **caractérisé en ce que** les signaux sont des signaux radio.

3. Rétroviseur intérieur selon l'une ou l'autre des revendications 1 et 2, **caractérisé en ce que** depuis la face intérieure du capuchon (19) font saillie des entretoises (19 à 21) sur lesquelles repose l'émetteur.

4. Rétroviseur intérieur selon l'une quelconque des revendications 1 à 3, **caractérisé en ce que** la commande de porte de garage (16) est programmable.

5. Rétroviseur intérieur selon l'une quelconque des revendications 1 à 4, **caractérisé en ce que** la commande de porte de garage (16) présente un récepteur (27).

6. Rétroviseur intérieur selon la revendication 5, **caractérisé en ce que** l'émetteur (17) et le récepteur (27) sont branchés à un micro-ordinateur (30).

7. Rétroviseur intérieur selon la revendication 6, **caractérisé en ce qu'**un décodeur (28) se trouve entre le récepteur (27) et le micro-ordinateur (30).

8. Rétroviseur intérieur selon l'une ou l'autre des revendications 7 et 8, **caractérisé en ce qu'**un codeur (28) est agencé entre l'émetteur (17) et le micro-ordinateur (30).

9. Rétroviseur intérieur selon l'une quelconque des revendications 6 à 8 **caractérisé en ce que** le micro-ordinateur (30) est relié via des lignes de signaux (33, 34) à l'émetteur (17) et au récepteur (27) pour régler la fréquence.

10. Rétroviseur intérieur selon l'une quelconque des revendications 6 à 9 **caractérisé en ce que** le micro-ordinateur (30) est relié via des lignes de signaux (35, 36) au décodeur et au codeur (32) pour régler le processus de décodage/codage.
